# EUROPÄISCHE PATENTSCHRIFT

(11) **EP 3 139 027 B1**
(45) Veröffentlichungstag und Bekanntmachung des Hinweises auf die Patenterteilung: **19.04.2023**
(21) Anmeldenummer: 16186867.4
(22) Anmeldetag: 01.09.2016
(51) Int. Cl.: F02M 37/10, F02M 37/00, F16K 15/14, F16K 17/02, F16K 31/00

(54) **THERMOSTATISCHES VENTIL MIT ANTI-SIPHON-MERKMAL**
THERMOSTATIC VALVE WITH ANTI-SIPHON CHARACTERISTIC
VANNE THERMOSTATIQUE AYANT UNE PROPRIETE ANTI-SIPHON

(30) Priorität: 02.09.2015 US 201562213463 P; 26.07.2016 US 201615219645
(43) Veröffentlichungstag der Anmeldung: 08.03.2017
(73) Patentinhaber: Vitesco Technologies USA, LLC, Auburn Hills, MI 48326 (US)
(72) Erfinder: Beemer, Erin, Goodrich, MI 48438 (US); Powers, Michael G, Shelby Township, MI 48315 (US); Wattai, John Patrick, Rochester Hills, MI 48306 (US)
(74) Vertreter: Vitesco Technologies

(56) Entgegenhaltungen:
- WO-A1-88/09867
- WO-A1-2008/027061
- WO-A1-2015/071790
- DE-A1-102006 050 161
- US-A- 6 152 114
- US-A1- 2013 221 118

## Beschreibung

### GEBIET DER ERFINDUNG

Die Erfindung betrifft allgemein ein Ventil für ein Kraftstoffmodul, das zum Verhindern von Rückfluss bei Auftreten eines unerwünschten Druckabfalls verwendet wird.

### HINTERGRUND DER ERFINDUNG

Kraftstoffmodule sind gemeinhin bekannt und werden zum Leiten von Kraftstoff von einem Kraftstofftank zu einem Motor verwendet. Mehrere dieser Arten von Kraftstoffmodulen haben ein Rückführsystem, bei dem Kraftstoff, der nicht von dem Motor verbraucht wird, zum Kraftstofftank zurückgeführt wird. Diese Rückführsysteme arbeiten in der Regel mit einem bestimmten Druck von in der Regel unter 50 kPa. Wenn jedoch irgendeine der Leitungen oder andere Komponenten im Rückführsystem beeinträchtigt sind, wie zum Beispiel getrennt oder gebrochen sind, kann der Druck im Rückführsystem auf unerwünschte Höhen abfallen und ein Versagen des Kraftstoffmoduls verursachen.

US 2013/221118 A1 betrifft ein Thermostatventil für ein Dieselkraftstoffsystem, das ein Ventilgehäuse und ein Ventilelement umfasst, das innerhalb des Gehäuses zwischen einer Position, in der erwärmter Dieselkraftstoff zu einer Kraftstoffpumpe geleitet wird, und einer Position, in der der Kraftstoff in einen Vorratsbehälter geleitet wird, beweglich ist.

Demgemäß gibt es einen Bedarf an einem Kraftstoffmodul, das einen unerwünschten Druckabfall (im Kraftstoffmodul) bei einer Beeinträchtigung einer oder mehrerer der Komponenten im Kraftstoffrückführsystem verhindern kann.

### KURZFASSUNG DER ERFINDUNG

Die vorliegende Erfindung betrifft eine Thermostatventilvorrichtung mit den Merkmalen des Anspruchs 1. Die Thermostatventilvorrichtung weist ein thermostatisches Ventil zur Verwendung mit einem Kraftstoffmodul auf, das zum automatischen Schließen, wenn der an das Ventil angelegte Druck unter einen vorbestimmten Wert fällt, wirkt.

Dieselkraftstoff durchströmt ein Schirmventil, des thermostatischen Ventils von dem Rückführsystem mit ca. 50 kPa. Wenn Kraftstoffdruck unter ca. 15 kPa abfällt, schließt sich das Schirmventil, wodurch verhindert wird, dass Dieselkraftstoff durch das Kraftstoffsystem zurückkehrt. Dies wirkt zum Eliminieren/Reduzieren eines Entweichens von Kraftstoff aus dem System im Falle einer Beeinträchtigung der Kraftstoffrückführleitungen außerhalb des Kraftstofftanks. Daher besteht eine Aufgabe der vorliegenden Erfindung in der Verhinderung eines Ausheberns von Dieselkraftstoff aus dem Kraftstofftank, wenn Kraftstoffleitungen außerhalb des Kraftstofftanks beeinträchtigt worden sind.

Eine andere Aufgabe der vorliegenden Erfindung besteht in der Bereitstellung eines in dem thermostatischen Ventil integrierten Anti-Siphon-Ventils, das den zum Erfüllen von Kundenanforderungen erforderlichen Packungsraum auf ein Minimum reduziert. Noch eine andere Aufgabe der vorliegenden Erfindung besteht in der Bereitstellung eines thermostatischen Ventils mit dem Anti-Siphon-Merkmal, das in aktuelle Anwendungen nachgerüstet werden kann.

Bei einer Ausführungsform handelt es sich bei der vorliegenden Erfindung um ein thermostatisches Ventil, das einen Hauptkörperteil, eine als Teil des Hauptkörperteils ausgebildete Kammer und eine neben der Kammer integral mit dem Hauptkörperteil ausgebildete Innenwand enthält. Ein Umfangsflansch ist integral so mit der Innenwand ausgebildet, dass der Umfangsflansch eine Ventilkammer umgibt. Ein an der Innenwand befestigtes Ventilglied ist in der Ventilkammer angeordnet, und eine Strömungsöffnung ist als Teil der Innenwand ausgebildet . Fluid strömt durch die Strömungsöffnung in die Ventilkammer, und wenn der Druck in der Ventilkammer im Vergleich zu dem Druck in der Kammer über einem vorbestimmten Wert liegt, berührt das Ventilglied die Innenwand, wodurch verhindert wird, dass Fluid durch die Strömungsöffnung strömt.

Das Ventilglied enthält einen flexiblen Flanschteil, der durchbiegt und die Innenwand berührt, wenn der Druck in der Ventilkammer über einem vorbestimmten Wert liegt. Weiterhin ist als Teil der Innenwand eine Befestigungsöffnung ausgebildet, ein Basisteil integral mit dem flexiblen Flanschteil ausgebildet und ein Haltemerkmal als Teil des Basisteils integral ausgebildet, wobei der Basisteil und das Haltemerkmal Teil des Ventilglieds sind. Der Basisteil erstreckt sich durch die Befestigungsöffnung, und das Haltemerkmal verhindert ein Entfernen des Basisteils aus der Befestigungsöffnung.

Der flexible Flanschteil ist so ausgebildet, dass der flexible Flanschteil eine Standardposition aufweist, und wenn sich der flexible Flanschteil in der Standardposition befindet, ist der flexible Flanschteil zu der Innenwand vorgespannt und berührt sie und verhindert, dass Fluid durch die Strömungsöffnung strömt.

Bei einer Ausführungsform ist das thermostatische Ventil mit einer inneren Anordnung verbunden, die Teil eines Kraftstoffmoduls ist. Die innere Anordnung enthält ein Verteilergehäuse, und das thermostatische Ventil ist mit dem Verteilergehäuse verbunden. Mindestens ein Stützglied ist als Teil des Verteilergehäuses ausgebildet, und mindestens eine Kontaktfläche ist als Teil des mindestens einen Stützglieds ausgebildet. Das Ventilglied steht mit der Kontaktfläche in Kontakt, wenn der Druck in der Kammer um ein vorbestimmtes Ausmaß größer ist als der Druck in der Ventilkammer. Das Verteilergehäuse enthält einen Wandteil, der eine Verteilerkammer bildet, und mindestens eine innere Strömungsöffnung befindet sich neben dem Stützglied. Die innere Strömungsöffnung gewährleistet eine fluidische Verbindung zwischen der Verteilerkammer und der Ventilkammer.

Weitere Anwendungsbereiche der vorliegenden Erfindung gehen aus der folgenden detaillierten Beschreibung hervor. Es sollte auf der Hand liegen, dass die detaillierte Beschreibung und bestimmte Beispiele zwar die bevorzugte Ausführungsform der Erfindung angeben, aber nur der Veranschaulichung dienen und den Schutzumfang der Erfindung nicht einschränken sollen.

### KURZE BESCHREIBUNG DER ZEICHNUNGEN

Die vorliegende Erfindung wird anhand der detaillierten Beschreibung und der beigefügten Zeichnungen besser verständlich; darin zeigen:
Figur 1 eine perspektivische Ansicht eines Kraftstoffmoduls mit einem thermostatischen Ventil, wobei ein Teil eines Verteilergehäuses weggeschnitten ist, gemäß Ausführungsformen der vorliegenden Erfindung;
Figur 2 eine als Schnitt ausgeführte Seitenansicht eines Kraftstoffmoduls mit einem thermostatischen Ventil gemäß Ausführungsformen der vorliegenden Erfindung;
Figur 3A eine Seitenansicht einer inneren Anordnung eines Kraftstoffmoduls mit einem thermostatischen Ventil gemäß Ausführungsformen der vorliegenden Erfindung;
Figur 3B eine erste perspektivische Ansicht einer inneren Anordnung eines Kraftstoffmoduls mit einem thermostatischen Ventil gemäß Ausführungsformen der vorliegenden Erfindung;
Figur 3C eine perspektivische Ansicht eines thermostatischen Ventils gemäß Ausführungsformen der vorliegenden Erfindung;
Figur 3D eine zweite perspektivische Ansicht einer inneren Anordnung eines Kraftstoffmoduls mit entferntem thermostatischen Ventil gemäß Ausführungsformen der vorliegenden Erfindung; und
Figur 3E eine als Schnitt ausgeführte Seitenansicht einer inneren Anordnung eines Kraftstoffmoduls mit einem thermostatischen Ventil gemäß Ausführungsformen der vorliegenden Erfindung.

### DETAILLIERTE BESCHREIBUNG DER BEVORZUGTEN AUSFÜHRUNGSFORMEN

Die folgende Beschreibung der bevorzugten Ausführungsform(en) ist rein beispielhaft und soll die Erfindung, ihre Anwendung oder Verwendungen in keiner Weise einschränken.

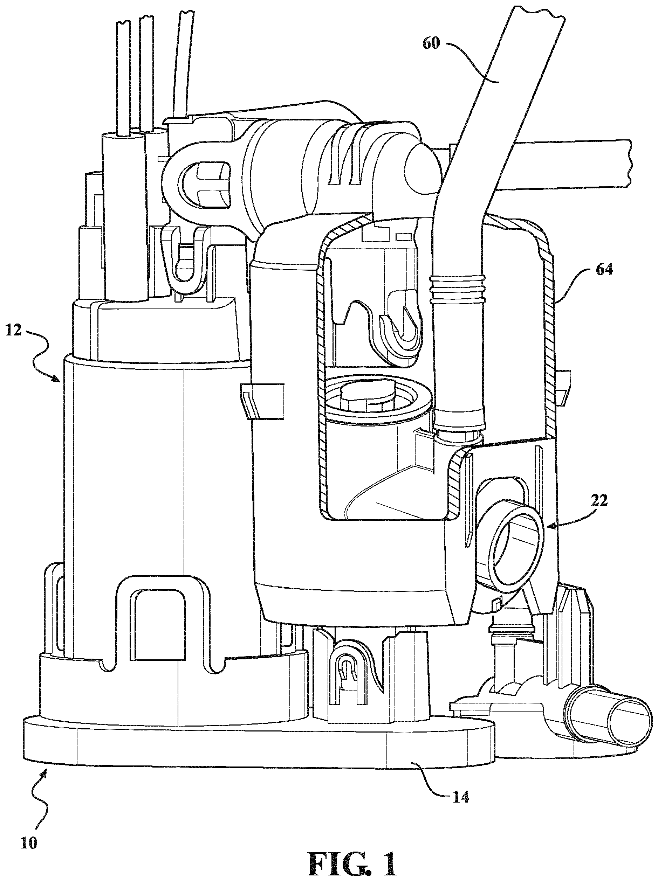

Eine erste Ausführungsform eines Kraftstoffmoduls mit einem thermostatischen Ventil gemäß der vorliegenden Erfindung wird in den Figuren 1-2 allgemein bei 10 gezeigt. Das Modul 10 enthält eine allgemein bei 12 gezeigte Pumpenanordnung mit einem Elektromotor 12a und einen allgemein bei 16 gezeigten Pumpmechanismus. Der Pumpmechanismus 16 kann irgendeine Art von Pumpmechanismus sein, der Fluid übertragen kann, die bei dieser Ausführungsform eine Flügelradpumpe ist. Mit der Pumpenanordnung 12 ist ein Kraftstofffilter 14 verbunden und weiterhin ist mit dem Kraftstofffilter 14 ein Gehäuse 18 verbunden, das Teil einer allgemein bei 20 gezeigten inneren Anordnung ist.

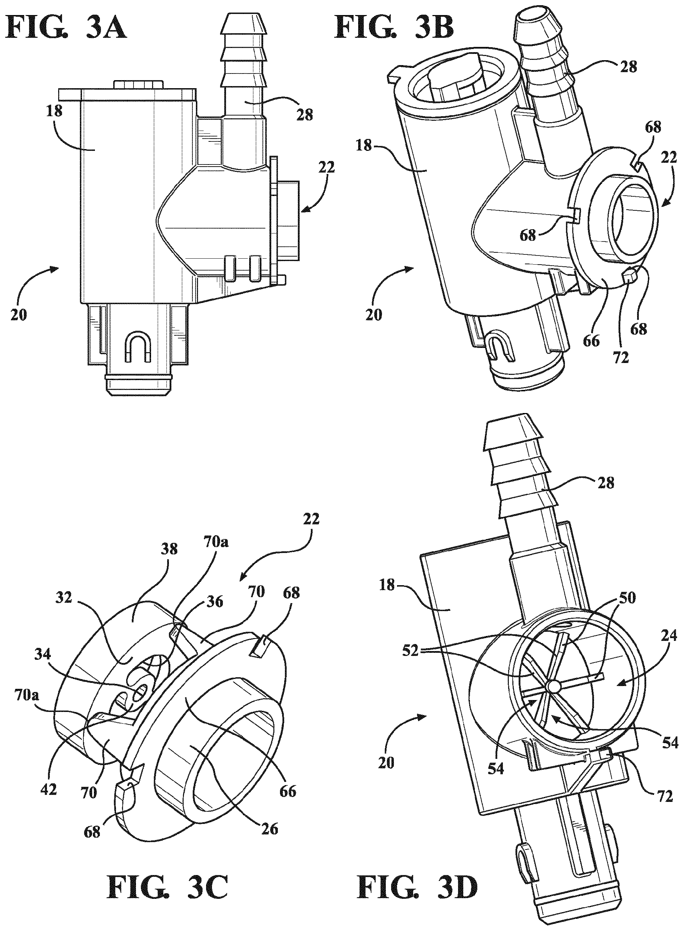

Auf die Figuren 3A-3E Bezug nehmend, enthält die Anordnung 20 auch ein Schirmventil 22, das in einer allgemein bei 24 gezeigten Kammer positioniert ist, die als Teil des Gehäuses 18 ausgebildet ist. Das Ventil 22 enthält eine allgemein bei 25 gezeigte Kammer, die als Teil eines Hauptkörperteils 26 ausgebildet ist, wobei die Kammer 25 in fluidischer Verbindung mit einem als Teil des Gehäuses 18 ausgebildeten Einlassstutzen 28 steht, so dass in der Kammer 25 und im Einlassstutzen 28 positionierter Kraftstoff im Wesentlichen auf dem gleichen Druck liegt. Das Ventil 22 enthält einen abgestuften Teil 30, der unter Verwendung einer Schweißverbindung mit dem Gehäuse 18 verbunden ist. Es liegt jedoch innerhalb des Schutzumfangs der Erfindung, dass irgendein geeignetes Verbindungsverfahren verwendet werden kann.

Der Hauptkörperteil 26 weist auch eine Innenwand 32 auf, die eine Befestigungsöffnung 34 und mehrere Strömungsöffnungen 36 enthält. Mit der Innenwand 32 ist integral ein Umfangsflansch 38 ausgebildet, und eine allgemein bei 40 gezeigte Ventilkammer wird von dem Umfangsflansch 38 umgeben. In der Ventilkammer 40 ist ein Ventilglied 42 angeordnet. Das Ventilglied 42 enthält einen Befestigungsbasisteil 44, und mit dem Basisteil 44 ist integral ein Haltemerkmal 46 ausgebildet. Der Basisteil 44 ist in der Befestigungsöffnung 34 angeordnet, und das Haltemerkmal 46 hält die Verbindung zwischen dem Ventilglied 42 und der Innenwand 32 dadurch aufrecht, dass ein Entfernen des Basisteils 44 aus der Befestigungsöffnung 34 (das heißt sein Bewegen dort hindurch) verhindert wird.

Des Weiteren enthält das Ventilglied 42 einen flexiblen Flanschteil 48, der entweder die Innenwand 32 oder mehrere Kontaktflächen 50 selektiv berührt, wobei jede Kontaktfläche 50 Teil eines entsprechenden Stützglieds 52 ist und jedes Stützglied 52 den flexiblen Flanschteil 48 stützt, wenn der Flanschteil 48 mit den Kontaktflächen 50 in Kontakt steht. Das Ventilglied 42 ist so positioniert, dass ein Teil der Innenwand 32 zwischen dem Haltemerkmal 46 und dem flexiblen Flanschteil 48 positioniert ist. Jedes Stützglied 52 ist integral mit dem Gehäuse 18 ausgebildet, und zwischen den Stützgliedern 52 sind mehrere innere Strömungsöffnungen 54 positioniert. Die inneren Strömungsöffnungen 54 platzieren die Ventilkammer 40 in fluidischer Verbindung mit einer allgemein bei 56 gezeigten Verteilerkammer, die als Teil des Gehäuses 18 ausgebildet ist, so dass sich in der Verteilerkammer 56 und in der Ventilkammer 40 befindender Kraftstoff im Wesentlichen auf dem gleichen Druck liegt. Ein allgemein bei 58 gezeigter linearer Aktuator bzw. Wachsmotor (engl. Wax Motor) ist in der Verteilerkammer 56 angeordnet, und die Verteilerkammer 56 ist von einem Wandteil 62 des Gehäuses 18 geben.

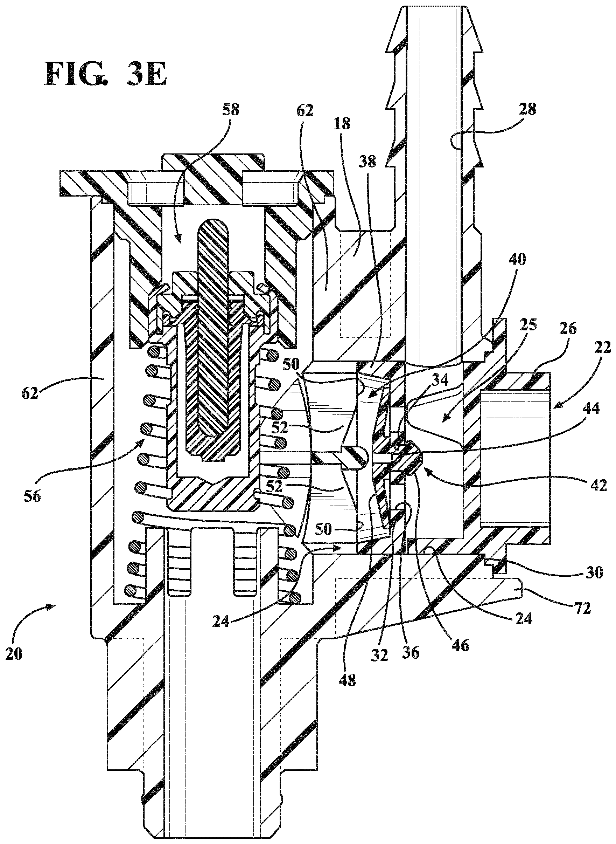

Das Schirmventil 22 enthält weiterhin mehrere Ausrichtungsmerkmale, um zu gewährleisten, dass das Ventil 22 ordnungsgemäß mit dem Gehäuse 18 verbunden wird. Das Ventil 22 enthält einen äußeren Flansch 66, und als Teil des äußeren Flansches 66 sind mehrere Kerben bzw. Nuten 68 ausgebildet. Das Ventil 22 umfasst ferner mehrere bogenförmige Stützglieder 70, von denen jedes einen Scheitel bzw. eine Spitze 70a hat, der bzw. die während der Montage durch einen Prozess, wie zum Beispiel Schweißen oder dergleichen, mit der Innenwand 32 verbunden wird. Es sind drei bogenförmige Stützglieder 70 vorgesehen, die in einem gleichen Abstand voneinander angeordnet sind. Es ist ein Ansatz oder eine Nase 72 vorgesehen, der bzw. die als Teil des Gehäuses 18 ausgebildet ist, und während der Montage wird das Ventil 22 so positioniert, dass die Nase 72 mit einer der Kerben 68 in Eingriff gebracht wird. Die Kerben 68 sind bezüglich der bogenförmigen Stützglieder 70 so positioniert, dass, wenn das Ventil 22 mit dem Gehäuse 18 verbunden ist, wie in Figur 3A, 3B gezeigt, der Strom des Kraftstoffs durch eines der bogenförmigen Stützglieder 70 am wenigsten behindert wird. Das Ventil 22 kann so mit dem Gehäuse 18 verbunden sein, dass die Nase 72 mit irgendeiner der Kerben 68 in Eingriff gebracht werden kann, wie in den Figuren 3B und 3E gezeigt.

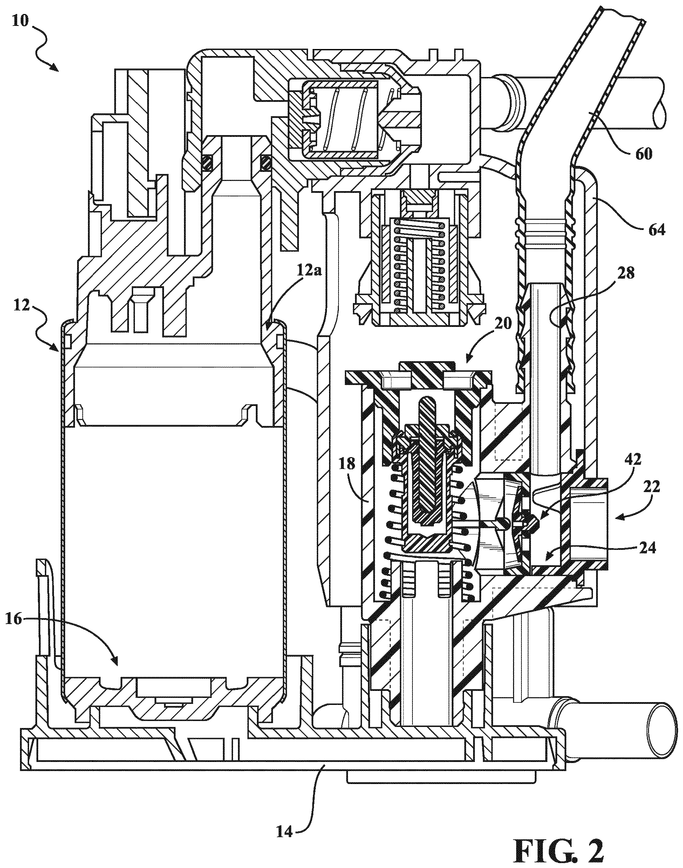

Der flexible Flanschteil 48 ist so ausgeführt, dass er eine in Figur 3E gezeigte Standardposition hat, in der der Flanschteil 48 in Kontakt mit der Innenwand 32 steht. Bei dieser Ausführungsform ist der Flanschteil 48 so ausgeführt, dass der Flanschteil 48 eine in den Figuren 2 und 3E gezeigte Standardposition hat, in der der Flanschteil 48 zu der Innenwand 32 vorgespannt ist und sie berührt.

Während des Betriebs kann Kraftstoff vom Einlassstutzen 28 durch die Kammer 25, durch die Strömungsöffnungen 36 strömen und den Flanschteil 48 berühren, aber es strömt kein Kraftstoff um den Flanschteil 48 herum, da der Flanschteil 48 in Kontakt mit der Innenwand 32 vorgespannt ist. Damit sich der Flanschteil 48 von der Innenwand 32 weg bewegen kann und dem Kraftstoff gestatten kann, um den Flanschteil 48 herum zu strömen, muss der Kraftstoffstrom vom Einlassstutzen 28 derart sein, dass genug Druck an den flexiblen Flanschteil 48 angelegt wird, um zu bewirken, dass der flexible Flanschteil 48 durchbiegt und sich von der Innenwand 32 weg bewegt, wodurch dem Kraftstoff gestattet wird, durch die Strömungsöffnung 36 zu passieren und um den Flanschteil 48 herum zu strömen. Wenn in der Verteilerkammer 56 und deshalb in der Ventilkammer 40 jedoch ein Druck herrscht, der zusammen mit der Vorspannkraft des Flanschteils 48 den Druck im Einlassstutzen 28 und deshalb in der Kammer 25 übersteigt, biegt der flexible Flanschteil 48 durch und berührt die Innenwand 32, wodurch verhindert wird, dass zusätzlicher Kraftstoff durch die Strömungsöffnung 36 passiert. Wenn sich der Druck in der Verteilerkammer 56 abgebaut hat, wird der an den Flanschteil 48 angelegte Druck vom Kraftstoff in der Ventilkammer 40 weit genug reduziert, und es wird von dem vom Einlassstutzen 28 strömenden Kraftstoff ausreichender Druck an den Flanschteil 48 angelegt, der Flanschteil 48 bewegt sich weg und steht wiederum nicht mehr in Kontakt mit der Innenwand 32, wodurch Kraftstoff wieder durch die inneren Öffnungen 54 passieren kann.

Der Flanschteil 48 kann in Abhängigkeit von der Druckdifferenz in der Verteilerkammer 56 im Vergleich zu dem Druck im Einlassstutzen 28 in verschiedenen Ausmaßen durchbiegen, so dass Kraftstoff immer noch durch die Strömungsöffnung 36 passieren kann. Wenn ferner zwischen der Kammer 25 und der Ventilkammer 40 ein Druckungleichgewicht besteht, so dass der Flanschteil 48 nicht mit der Innenwand 32 in Kontakt steht, wie oben beschrieben, ist es auch möglich, dass der flexible Flanschteil 48 leicht durchbiegt, aber immer noch nicht die Innenwand 32 oder irgendeine der Flächen 50 berührt, wodurch geringe Druckschwankungen in dem vom Einlassstutzen 28 zur Kammer 25 strömenden Kraftstoff oder dem sich in der Ventilkammer 40 (und deshalb in der Verteilerkammer 56) befindenden Kraftstoff gestattet werden.

Die innere Anordnung 20 ist im Wesentlichen von einem Verteilergehäuse 64 umgeben. Eine mit dem Einlassstutzen 28 verbundene Rückführleitung 60 erstreckt sich in das Verteilergehäuse 64. Die Rückführleitung 60 ist Teil eines Kraftstoffrückführsystems, das unverbrauchten Kraftstoff zum Kraftstoffmodul 10 zurück leitet. Wenn eine der Komponenten im Rückführsystem versagt oder auf andere Weise beeinträchtigt wird, wird der Druck in der Rückführleitung 60 und deshalb im Einlassstutzen 28 und in der Kammer 25 reduziert und wird zu niedrig; dies erzeugt wiederum ein Druckungleichgewicht zwischen der als Teil des Hauptkörperteils 26 gebildeten Kammer 25 und der Ventilkammer 40. Die relative Druckdifferenz zwischen der Kammer 25 und der Ventilkammer 40 verursacht zusammen mit der Vorspannkraft des flexiblen Flanschteils 48, dass der flexible Flanschteil 48 die Innenwand 32 berührt, wodurch ein Abfall des Fluiddrucks in der Verteilerkammer 56 auf eine unerwünschte Höhe verhindert wird.

Wenn der Druck in der Kammer 25 während des Betriebs viel größer ist als der Druck in der Ventilkammer 40, kann sich der flexible Flanschteil 48 stark genug durchbiegen, um die Kontaktflächen 50 zu berühren. Ein anderer Vorteil der vorliegenden Erfindung besteht darin, dass die Stützglieder 52 und die Kontaktflächen 50 dahingehend positioniert sind, das Ausmaß zu begrenzen, in dem sich der flexible Flanschteil 48 durchbiegen kann, wodurch sie ein Maximum bereitstellen, um das sich der Flanschteil 48 unabhängig von der Druckdifferenz zwischen der Kammer 25 und der Ventilkammer 40 durchbiegen kann. Das Begrenzen des Ausmaßes, um das sich der Flanschteil 48 durchbiegen kann, verhindert eine dauerhafte Verformung des Flanschteils 48 und gewährleistet, dass der Flanschteil 48 in der Lage ist, in die Standardposition zurückzukehren, wenn der Druck des Kraftstoffs in der Kammer 25 ausreichend geringer als der Druck in der Ventilkammer 40 ist.

## Patentansprüche

1. Thermostatventilvorrichtung (20) für ein Kraftstoffmodul zum Leiten von Kraftstoff von einem Kraftstofftank zu einem Motor, aufweisend:
ein thermostatisches Ventil (58) mit
einem Hauptkörperteil (62), welcher eine Verteilerkammer (56) zur Aufnahme eines linearen Aktuators umfasst, und einen Einlassstutzen (28) zur Verbindung mit einer Kraftstoffrückführleitung,
**dadurch gekennzeichnet, dass**
sich an die Verteilerkammer (56) ferner eine Aufnahme für ein als Rückschlagventil fungierendes Schirmventil (22) anschließt,
wobei das Schirmventil (22) den Einlassstutzen (28) mit der Verteilerkammer (56) verbindet, so dass Kraftstoff von der Rückführleitung über den Einlassstutzen (28) und das Schirmventil (22) in die Verteilerkammer (56) einströmen kann, wobei das Schirmventil (22) zumindest eine Strömungsöffnung (36) in einer radialen Innenwand (32) aufweist, durch welche der Kraftstoff strömt, wenn sich ein schirmartiger, flexibler Flanschteil (48) eines Ventilgliedes (42) des Schirmventils (22) von der Innenwand (32) druckbedingt wegbewegt, gegen welche der Flanschteil (48) vorgespannt ist, und
wobei der flexible Flanschteil (48) gegen die Innenwand (32) vorgespannt ist, wenn der Druck auf Seiten des Einlassstutzens (28) unter einem vorbestimmten Wert liegt.

2. Vorrichtung nach Anspruch 1, ferner aufweisend:
eine als Teil der Innenwand ausgebildete Befestigungsöffnung (34),
einen integral mit dem flexiblen Flanschteil ausgebildeten Basisteil (34) des Schirmventil (22), und
ein integral als Teil des Basisteils ausgebildetes Halteteil (46),
wobei sich der Basisteil durch die Befestigungsöffnung (34) erstreckt und das Halteteil (46), verhindert, dass sich der Basisteil aus der Befestigungsöffnung bewegt.

3. Vorrichtung nach Anspruch 1, wobei der flexible Flanschteil ferner eine Standardposition aufweist, und wenn er sich in der Standardposition befindet, der flexible Flanschteil zu der Innenwand vorgespannt ist und sie berührt, wodurch verhindert wird, dass Fluid durch die mindestens eine Strömungsöffnung strömt.

4. Vorrichtung nach Anspruch 3,
mindestens ein als Teil des Verteilergehäuses ausgebildetes Stützglied (52) zur Abstützung des Flanschteils (48) mit mindestens einer Strömungsöffnung (54), welche eine fluidische Verbindung zwischen der Verteilerkammer und dem Einlassstutzen (28) bereitstellt
mindestens eine als Teil des mindestens einen Stützglieds ausgebildete Kontaktfläche, wobei die mindestens eine Kontaktfläche mit dem Ventilglied in Kontakt steht, wenn der Druck in der Kammer um ein vorbestimmtes Ausmaß größer ist als der Druck der Ventilkammer.

## Claims

1. Thermostatic valve device (20) for a fuel module for conducting fuel from a fuel tank to an engine, having:
a thermostatic valve (58) with
a main body part (62), which comprises a distributor chamber (56) for accommodating a linear actuator, and
an inlet connector (28) for connection to a fuel return line,
**characterized in that**
the distributor chamber (56) is furthermore adjoined by a receptacle for an umbrella-type valve (22) functioning as a check valve,
wherein the umbrella-type valve (22) connects the inlet connector (28) to the distributor chamber (56) such that fuel can flow via the inlet connector (28) and the umbrella-type valve (22) from the return line into the distributor chamber (56), wherein the umbrella-type valve (22) has at least one flow opening (36) in a radial inner wall (32), through which the fuel flows if pressure causes an umbrella-like flexible flange part (48) of a valve member (42) of the umbrella-type valve (22) to move away from the inner wall (32), against which the flange part (48) is preloaded, and
wherein the flexible flange part (48) is preloaded against the inner wall (32) if the pressure on the side of the inlet connector (28) is below a predetermined value.

2. Apparatus according to Claim 1, furthermore having:
a fastening opening (34) formed as part of the inner wall,
a base part (34) of the umbrella-type valve (22), which base part is formed integrally with the flexible flange part, and
a holding part (46) which is formed integrally as part of the base part,
wherein the base part extends through the fastening opening (34) and the holding part (46) prevents the base part from moving out of the fastening opening.

3. Apparatus according to Claim 1, wherein the flexible flange part furthermore has a default position, and if in the default position, the flexible flange part is preloaded in relation to the inner wall and contacts it, whereby flow of fluid through the at least one flow opening is prevented.

4. Apparatus according to Claim 3, furthermore having:
at least one support member (52) which is formed as part of the distributor housing and which serves for supporting the flange part (48) and which has at least one flow opening (54) which provides a fluidic connection between the distributor chamber and the inlet connector (28),
at least one contact surface which is formed as part of the at least one support member (52), wherein the at least one contact surface is in contact with the valve member if the pressure in the chamber is higher than the pressure of the valve chamber by a predetermined amount.

## Revendications

1. Dispositif de soupape thermostatique (20) pour un module de carburant pour acheminer du carburant d'un réservoir de carburant à un moteur, présentant :
une soupape thermostatique (58) avec
une partie de corps principal (62), qui comprend une chambre de distribution (56) pour recevoir un actionneur linéaire, et une tubulure d'admission (28) pour la liaison à une conduite de recyclage de carburant,
**caractérisé en ce que**
la chambre de distribution (56) est en outre suivie d'un logement pour une soupape de protection (22) agissant en tant que soupape anti-retour,
la soupape de protection (22) reliant la tubulure d'admission (28) à la chambre de distribution (56), de telle sorte que du carburant peut s'écouler de la conduite de recyclage dans la chambre de distribution (56) par l'intermédiaire de la tubulure d'admission (28) et de la soupape de protection (22), la soupape de protection (22) présentant au moins une ouverture d'écoulement (36) dans une paroi intérieure radiale (32), à travers laquelle le carburant s'écoule lorsqu'une partie de bride flexible en forme d'écran (48) d'un élément de soupape (42) de la soupape de protection (22) s'éloigne, en raison de la pression, de la paroi intérieure (32) contre laquelle la partie de bride (48) est précontrainte, et
la partie de bride flexible (48) étant précontrainte contre la paroi intérieure (32) lorsque la pression du côté de la tubulure d'admission (28) est inférieure à une valeur prédéterminée.

2. Dispositif selon la revendication 1, présentant en outre :
une ouverture de fixation (34) configurée en tant que partie de la paroi intérieure,
une partie de base (34) de la soupape de protection (22) configurée d'un seul tenant avec la partie de bride flexible, et
une partie de retenue (46) configurée d'un seul tenant en tant que partie de la partie de base,
la partie de base s'étendant à travers l'ouverture de fixation (34) et la partie de retenue (46) empêchant la partie de base de se déplacer hors de l'ouverture de fixation.

3. Dispositif selon la revendication 1, dans lequel la partie de bride flexible présente en outre une position standard et, lorsqu'elle se trouve dans la position standard, la partie de bride flexible est précontrainte vers la paroi intérieure et la touche, empêchant ainsi le fluide de s'écouler à travers l'au moins une ouverture d'écoulement.

4. Dispositif selon la revendication 3, présentant en outre :
au moins un élément de support (52) configuré en tant que partie du boîtier de distribution pour supporter la partie de bride (48), avec au moins une ouverture d'écoulement (54) qui fournit une liaison fluidique entre la chambre de distribution et la tubulure d'admission (28),
au moins une surface de contact configurée en tant que partie de l'au moins un élément de support, l'au moins une surface de contact étant en contact avec l'élément de soupape lorsque la pression dans la chambre est supérieure à la pression de la chambre de soupape d'une mesure prédéterminée.
